# EUROPÄISCHE PATENTANMELDUNG

(11) **EP 4 353 438 A1**
(43) Veröffentlichungstag der Anmeldung: **17.04.2024**
(21) Anmeldenummer: 22200981.3
(22) Anmeldetag: 11.10.2022
(51) Int. Cl.: B29B 13/00, C08F 6/28

(54) **VERFAHREN UND VORRICHTUNG ZUR KONTINUIERLICHEN DESODORIERUNG VON GRANULÄREN KUNSTSTOFFEN**

(71) Anmelder: Zeppelin Systems GmbH, 88045 Friedrichshafen (DE)
(72) Erfinder: SCHNEIDER, Hans, 88131 Lindau (DE); KOREHNKE, Marcus, 88250 Weingarten (DE)
(74) Vertreter: Riebling, Peter

(57) **Zusammenfassung**

Verfahren zur Desodorierung von Recycling-Granulaten zur Entfernung flüchtiger organischer Verbindungen (VOC) durch Wärme- und/oder Gasbehandlung in mindestens einem Desodorierungssilo (40, 41) mit folgenden Verfahrensschritten:
1.1 Behandeln der Granulate (62) im Desodorierungssilo (40, 41) bei einer Desodorierungstemperatur, die bei oder unter dem Erweichungspunkt der Granulate (62) liegt;
1.2 Halten der Granulate (62) auf der Deodorierungstemperatur;
1.3 Ausspülen volatiler Materialien aus den Granulaten (62) aus dem Desodorierungssilo (40, 41) durch Spülung der Produktfüllung (36) im Desodorierungssilo (40, 41) mittels eines erhitzten Spülgases;
1.4 Kühlen der Granulate (62), wobei
das Aufheizen von prozess-eingangsseitigen ReGranulaten (62) im Prozessschritt 1.1 in einem Granulaterhitzer (16) erfolgt, der seine Prozesswärme von einem eingangsseitigen Rekuperator (13) erhält, der von der Abwärme eines ausgangsseitigen Granulatkühlers (5) beheizt wird oder dass die heiße Abluft des Granulatkühlers (5) direkt in den Granulaterhitzer (16) eingeleitet wird.

## Beschreibung

Die Erfindung betrifft ein Verfahren und eine Vorrichtung zur kontinuierlichen Desodorierung von granulären Kunststoffen nach dem Oberbegriff des Patentanspruchs 1.

Ein eingangs genanntes Verfahren ist aus der EP 2 635 609 B1 bekannt. Dort wird das Produkt vor dem Einfüllen in das Desodorierungssilo mit Fremdenergie erwärmt, was mit einem hohen Energieverbrauch verbunden ist, der zu vermeiden ist. Die EP 2 635 609 B1 verwendet einen vom Desodorierungssilo getrennten Apparat zum Aufheizen des Granulats und ein nach dem Auslass am Desodorierungssilo angeordneten, weiteren Apparat zur Kühlung des ausgelassenen Granulats. Die Energie im Abluftstrom wird allerdings nicht wiederverwendet, sondern einfach über ein Auslassfilter gefiltert und schließlich einer nachgeschalteten thermischen Verwertungseinheit zugeführt, welche eine Entgiftung der ausgelassenen Abgase erbringen soll, wodurch zusätzliche elektrische Energie verbraucht wird.

Ein energiesparender Verfahrensablauf zur Aufheizung und Kühlung des Füllvolumens des Desodorierungssilos ist aus dieser Druckschrift nicht zu entnehmen.

Ebenso fehlt in dieser Druckschrift ein Hinweis auf die Geruchsbeseitigung bei der Behandlung von ReGranulaten. Solche ReGranulate haben Restverunreinigungen von fremden Polymeren und sind daher besonders kritisch zu verarbeiten. Ein aus der EP 2 635 609 B1 bekannter kontinuierlicher Prozess ist für die Behandlung derartig verunreinigter Granulate (ReGranulate) schwierig zu beherrschen und führt zu unzureichenden Ergebnissen. Wegen der vom Grundgranulat abweichenden Schmelzpunkte der fremden Polymere neigen solche ReGranulate zu unerwünschten Agglomeraten, die mit den Merkmalen der Erfindung gut zu beherrschen sind.

Ein ähnlicher Stand der Technik ist aus der WO2014090856A1 zu entnehmen. In dieser Druckschrift erfolgt die Behandlung des erwärmten Granulats mit Stickstoffgas. Eine energiesparende Aufheizung des Granulats ist aus beiden Druckschriften nicht zu entnehmen.

Die EP 2 635 609 B1 offenbart dabei bereits folgende Prozessschritte:
1. Verfahren zur Desodorierung von Recycling-Granulaten (ReGranulate) zur Entfernung flüchtiger organischer Verbindungen (VOC) durch Wärme- und/oder Gasbehandlung, in einem Desodorierungssilo mit den folgenden Verfahrensschritten:
1.1 Heizen der Granulate im Desodorierungssilo auf eine Desodorierungstemperatur bei oder unter dem Erweichungspunkt der Granulate;
1.2 Halten der Granulate auf der Deodorierungstemperatur;
1.3 Dabei Ausspülen volatiler Materialien in den Granulaten aus dem Desodorierungssilo durch Spülung der Produktfüllung im Desodorierungssilo mittels eines erhitzten Gases;
1.4 Kühlen der Granulate
Der Erfindung liegt deshalb die Aufgabe zugrunde, mit optimiertem apparativem Aufwand bei Einsparung von wesentlicher Prozessenergie eine verbesserte Entgasung von rezyklierten Kunststoffgranulaten im kontinuierlichen Durchlaufbetrieb zu ermöglichen.

Zur Lösung der gestellten Aufgabe ist die Erfindung durch ein neuartiges Verfahren und eine das Verfahren ausführende Vorrichtung vorgesehen. Erfindungsgemäß ist nun in einer bevorzugten Ausführung nach dem unabhängigen Patentanspruch 1 vorgesehen, dass das Aufheizen der prozess-eingangsseitigen ReGranulate in einem Granulaterhitzer erfolgt, der seine Prozesswärme von einem eingangsseitigen Rekuperator erhält, der von der Abwärme eines ausgangsseitigen Granulatkühlers beheizt wird oder dass die heiße Abluft des Granulatkühlers direkt in den Granulaterhitzer eingeleitet wird.

Durch Erwärmung der in den Prozess eingeführten ReGranulate durch die Abwärme der den Prozess verlassenden Granulate wird eine wesentliche Energieeinsparung erreicht.

Vorteil der technischen Lehre des Anspruches 1 ist, dass bei geringerem Energieeinsatz, geringerem maschinellen Aufwand und einer betriebssicheren Verfahrensweise qualitativ hochwertiges Granulat aus dem Ausgangsstoff gewonnen werden kann.

Eine weitere Energieeinsparung erfolgt durch die technische Lehre des unabhängigen Patentanspruchs 4, der in einer bevorzugten Ausgestaltung vorsieht, dass die Abwärme des Abgasstroms aus den Desodorierungssilos zur Aufheizung des Spülgases für die Desodorierungssilos genutzt wird.

Durch diese Energie-Rückführung können weitere, beträchtliche Energiemengen eingespart werden.

Die Erfindung beschreibt auch in den unabhängigen Vorrichtungsansprüchen 15 und 16 neuartige Vorrichtungsmerkmale.

So ist es nach dem unabhängigen Patentanspruch 15 vorgesehen, dass der Granulaterhitzer seine Prozesswärme von einem eingangsseitigen Rekuperator erhält, der von der Abwärme des ausgangsseitigen angeordneten Granulatkühlers beheizbar ist.

Nach dem unabhängigen Patentanspruch 16 ist vorgesehen, dass die Abluft des einen oder der mehreren Desodorierungssilos über eine Siloabluftleitung einem Rekuperator zuführbar ist, der das Spülgas für die Desodorierungssilos aufheizt.

Beide Vorrichtungsansprüche beschreiben neuartige Rekuperatoren, die in besonders vorteilhafter Weise zu einer Energieeinsparung am Granulaterhitzer und darüber hinaus zu einer Energieeinsparung zur Aufheizung des Spülgases beitragen.

Mit dieser technischen Lehre wird der Vorteil erzielt, dass nun relativ große Volumina von ReGranulaten kontinuierlich in einem neuartigen Desodorierungssilo erhitzt und abgekühlt werden können, ohne dass eine größere Menge von Fremdenergie zugeführt werden muss.

Der bevorzugte erfinderische Verfahrensablauf hat demnach den Vorteil, dass bei geringerem Energieeinsatz, geringerem maschinellen Aufwand und einer betriebssicheren Verfahrensweise qualitativ hochwertiges Granulat aus dem eingangsseitigen ReGranulat gewonnen werden kann.

Unter dem Begriff "ReGranulate" werden bevorzugt, jedoch nicht abschließend die Kunststoff-Typen PE-HD, PE-LD, PP, sowie PS, die aus den Leichtverpackungsabfällen (LVP) wieder dem Herstellungsprozess zugeführt werden, verstanden.

### 1. Einsatzgebiet:

### 1.2 Geruchsreduzierung von Recycling-Granulaten (ReGranulate).

1.2.1 Im Bereich der "post-consumer" Kunststoffe sind das hauptsächlich die Kunststoff Typen PE-HD, PE-LD, PP, und PS, die aus den Leichtverpackungsabfällen (LVP) wieder dem Herstellungsprozess zugeführt werden.

### 1.2.2 Die Geruchsreduzierung nach der Herstellung von Kunststoffcompounds (Beimischungen von Additiven und Füllstoffen).

### 2. Merkmale der Erfindung

- Das Gesamtsystem ist modular aufgebaut und besteht aus mehreren Untersystemen (Baukastenkonzept).
- Es handelt sich um eine kompakte Anlage, die aber an den Aufstellungsort flexibel anpassbar ist.
- Trennung der Prozessschritte der Granulatbehandlung in 1. Aufheizen, 2. Entgasen, 3. Abkühlen
- Damit ist immer eine flexible Anpassung an die Anforderungen an das Eingangs-Schüttgut bezüglich Entgasungstemperatur, Verdünnungsgrad (Ventilatoreinstellung) & Verweilzeitdauer (Fahrweise Silo) gegeben.
- sehr hohe Prozesssicherheit & hohe Granulat-Qualität
- Spätere Anlagenerweiterung möglich (z. B. weiteres Desodorierungssilos, Leistungserhöhung Gebläse, Ventilatoren, ...)
- Flexibilität bei der Wahl der Energien für das Aufheizen (elektrisch, Gas, Dampf.)
- Betriebskosten können optimiert werden (Beispiel Gaspreis)
- Der Prozessschritt "Aufheizen" führt zu einer Reduzierung der Silohöhe durch ein neuartiges Desodorierungssilo, da die Schüttgutvorerwärmung im Silo entfällt (notwendige Erwärmungsschicht)
- Erhöhung der Verweilzeit bei vorgegebener Hallendeckenhöhe führt zur höheren Granulat-Qualität
- Im Prozessschritt "Aufheizen" erfolgt eine Vermeidung von Kondensation im Desodorierungssilo, da das Schüttgut im Desodorierungssilo schon vorgewärmt eintritt, daher keine kondensierte flüchtige Stoff im System
- Reduzierung Energieverbrauch durch Wärmeisolation und Energierückgewinnung über Rekuperatoren
- Kompakter & hocheffizienter Querstromwärmeaustauscher für Schüttgüter
- Keine unerwünschten Schüttgutveränderungen während der Desodorierung.
- Verhinderung von Schüttgut-Agglomeraten
- Geschlossenes System. Keine Beeinträchtigung der Schüttgüter durch äußere Umwelteinflüsse (Verunreinigungen, ...)
- leichte Reinigung der Gesamtanlage und der Komponenten & Baugruppen
- kurze Lieferzeit, Montagezeit und Inbetriebnahmezeit
- kostengünstiges Design und damit attraktiver Preis

### 3. Verschiedene Anlagen-Ausführungen

### 3.1 Maximal Ausprägung A:

3.1.1 Es sind zwei Desodorierungssilos vorhanden. Die Energierückgewinnung erfolgt nach den Desodorierungssilos und bei der Granulat-Aufheizung durch die erfindungsgemäße Abwärmerückführung von der Granulat-Abkühlung, Verringerung der Abluftmenge beim Aufheizen & direkte Rückführung des Heizgases). Damit sind folgende Vorteile verbunden:
3.1.1.1 schnellerer Chargenwechsel
   Beispiel: Restentleerung Desodorierungssilo 1 & Neubefüllung Desodorierungssilo 2, gleichzeitige Belüftung Silo 1 & 2, damit höhere Produktionsleistung.
3.1.1.2 Flexiblere Prozesssteuerung Längere Verweilzeit möglich, gleiches Schüttgut in Silo 1 & 2, Erhöhung Prozesssicherheit & hohe Granulat Qualität.
3.1.1.3 Bei begrenzter Hallendeckenhöhe (Extruder-Halle normalerweise 8 - 10 m Höhe) kann die notwendige Verweilzeit auch über zwei "niedrige" D-Silos eingehalten werden. Dadurch Reduzierung der Anlagenkosten "Hallendach"
3.1.1.4 Es erfolgt eine Rückführung des Heizgases (Aufheizen) zum Ansaugfilter für Frischgas und das führt zu einer Verringerung der Abluftmenge in der Abluftbehandlung (somit Regelung der "Aufkonzentrierung")

### 3.2 Mittlere Ausprägung B:

(Ein Desodorierungssilo vorhanden, Energierückgewinnung nach dem Desodorierungssilo und bei der Granulat-Aufheizung durch die Abwärmerückführung von der Granulat Abkühlung.

### 3.3 Minimale Ausprägung C:

Vorbemerkung: Alle nachfolgend beschriebenen Merkmale und Eigenschaften gelten analog nicht nur für die minimale Ausprägung C, sondern auch für die Ausprägungen A und B.

3.3.1 Es ist bei der minimalen Ausprägung nur ein Desodorierungssilo vorhanden. Die Energierückgewinnung erfolgt nach dem Desodorierungssilo.

3.3.2 Die Anlagenschnittstellen zu anderen System sind definiert.

Es sind klare Schnittstellen definiert: Schüttgutzuführung &-abführung, Abgasabführung in Umgebung oder zur Abluftbehandlung (z. B. Aktivkohle)

Dadurch ergeben sich einfache Planungsschnittstellen & geringe Planungskosten

3.3.3 Kompakte Anlage und gleichzeitig flexibel anpassbar an den Aufstellungsort.

Desodorierungsanlagen sind als Einzelsysteme ("stand alone") in Neuanlagen oder als Nachrüstung in bestehende Anlagen im Zuge einer "Modernisierung" möglich.

### 3.3.4 Geschlossenes System

Es gibt keine Beeinträchtigung der Schüttgüter durch äußere Umwelteinflüsse (Verunreinigungen, ...). Dadurch ergibt sich eine sehr hohe Prozesssicherheit bei hoher Granulat-Qualität

3.3.5 Wärmeisolation: alle Anlagenteile sind energiesparend wärmeisoliert. Der Wärmeverlust bzw. Energieverlust der Anlagen sind dadurch reduziert

3.3.6 Energierückgewinnung: Einsatz von Rekuperatoren (bevorzugt Luft/Luft Wärmetauscher). Dabei wird die Abwärme, zum Beispiel nach dem Desodorierungssilo oder aus der Kühleinheit, wieder den Erhitzer-Einheiten zugeführt. Dadurch:
- 3.3.6.1: erhebliche Reduzierung der Energiekosten. Folge: Reduzierung Betriebskosten (> 30 %)
- 3.3.6.2: Reduzierung Größe & Kosten Erhitzer, Folge: Reduzierung Anlagenkosten

3.3.7 Der Energieinhalt der vorgewärmten Granulate (nach dem Auslass aus dem Extruder) wird verwendet. Die warmen Granulatkörner verringern den Energieverbrauch der Gesamtanlage.

3.3.8 Kompakter & hocheffizienter Querstromwärmeaustauscher für Schüttgüter. Dadurch:
- 3.3.8.1: größere Anströmgeschwindigkeiten auf das Granulat möglich, im Vergleich zum Silo-Festbett. Dadurch:
- 3.3.8.2: größere und damit schnellere Wärmeübertragung bei der Erwärmung & Abkühlung
- 3.3.8.3: kleinere Baugröße und geringere Anschaffungskosten

3.3.9 First in / first out => alle Granulate haben die gleiche Verweilzeit im Granulaterhitzer oder im Granulatkühler. Dadurch gibt es keine extrem heißen Oberflächen, wie z. B. beim Plattenwärmeaustauscher, da als Heizmedium Luft eingesetzt wird.
- 3.3.9.1: schonendes Erhitzen/ keine Hot-Spots. Dadurch ergibt sich eine sehr hohe Prozesssicherheit
- 3.3.9.2: bei hoher Granulat-Qualität
- 3.3.10: Heizmedium Luft (Plug & Play / nur Steckdose notwendig. Es ist theoretisch kein Kühlwasser erforderlich (Verwendung von Kühlwasser ist zu aufwendig und oftmals problematisch)
- 3.3.10.1: Einfaches Heiz-Kühlverfahren
- 3.3.10.2: bei geringen Anschaffungskosten

3.3.11 Alle Förderleitungen haben bevorzugt eine aufgeraute Oberfläche. Dadurch ergibt sich eine Verhinderung von Engelshaar, das sich z. B. in der Rohrleitung bei der Förderung der Charge A (niedriger Schmelzpunkt) aufgebaut hat und bei Förderung der Charge B (hoher Schmelzpunkt) ablöst. Damit erfolgt keine Produktverschleppung von Charge A in Charge B, was eine hohe Produktqualität ergibt.

3.3.12 Verhinderung von Aufschmelzen von Restmengen der Charge A (niedriger Schmelzpunkt) während des Betriebs der Charge B mit höheren Temperaturen.
- 3.3.12.1: Daraus folgt eine sehr hohe Prozesssicherheit & Reduzierung Anlagenkosten (Reinigung)
- 3.3.12.2: An den Desodorierungssilo(s) ist eine kleine Förderleitung für eine Rezirkulierung vorhanden.

3.3.13 Sicherer Betrieb falls keine Abnahme aus den Desodorierungssilo(s) erfolgt. In diesem Fall wird das Schüttgut im "Kreis" gefahren (rezirkuliert). Das verhindert die Bildung von Agglomeraten und die spätere Austragung & Abförderung aus den Silo(s) ist zu jeder Zeit abgesichert. Daraus folgt eine sehr hohe Prozesssicherheit bei hoher Granulat-Qualität

3.3.14 Optional Zusatzausprägung "Dampfstrippen"

Wasserdampf im Entgasungsstrom verbessert die Wärmeübertragung und die Diffusion. Daraus folgt eine größere und damit schnellere Wärmeübertragung bei der Erwärmung & Abkühlung.

### 4. Leistung und Vorteile der Erfindung

Im Vordergrund der Erfindung steht die Geruchsreduzierung von Recycling-Granulaten (ReGranulate).

Wie obenstehend bereits ausgeführt sind das im Bereich der "post-consumer" Kunststoffe hauptsächlich die Kunststoff-Typen PE-HD, PELD, PP, und PS, die aus den Leichtverpackungsabfällen (LVP) wieder dem Herstellungsprozess zugeführt werden. Unter Verwendung der technischen Lehre der Erfindung ist bei Einsatz geänderter Verfahrensparameter und Vorrichtungsmerkmalen auch die Geruchsreduzierung von ReGranulaten des Typs PET oder PVC vorgesehen.

Bei den hier betrachteten ReGranulaten erfolgt die Entfernung der schwer flüchtigen, langkettigen Geruchsstoffe, die zum Beispiel im Kunststoff eindiffundiert sind.

### 5. Funktion der Desodorierungsanlage

5.1 In einem thermischen Reinigungsprozess werden die Re-Granulate oder die Kunststoffcompounds von Gerüchen (schwer flüchtige, organische Verbindungen VOC) gereinigt. Dabei wird das Granulat im ersten Schritt mit Hilfe eines als Granulaterhitzer ausgebildeten Querstromwärmeaustauschers knapp unter die Erweichungstemperatur schonend erhitzt. Anschließend erfolgt im zweiten Schritt die Entgasung mit heißer Luft in einem separaten Desodorierungssilo. Im dritten Schritt erfolgt die Kühlung des Granulates in einem weiteren als Granulatkühler ausgebildeten Wärmeaustauscher auf eine für das nachfolgende System geeignete Temperatur. Dabei entstehen sehr hochwertige Kunststoffgranulate.

Dadurch ergeben sich bei der Herstellung von höherwertigen ReGranulaten neue Anwendungsmöglichkeiten, die bisher nur mit Neuware möglich waren und damit ein höherer Umsatz, eine Markterweiterung und höhere Verkaufserlöse.

Es wird eine sehr gute und stabile Granulat-Qualität für den Wohn-, Automobil-, Design-, Freizeit-, Lifestyle- und Kosmetik-Bereich erreicht.

5.2 Die hier betrachteten ReGranulaten & Kunststoffcompounds sind allgemein für Highend Produkte geeignet.
- 5.3: Es gibt keine unerwünschten Schüttgutveränderungen während der Desodorierung dadurch wird eine gleichbleibend hohe Granulat-Qualität gewährleistet.
- 5.4: Für die Entgasung der Kunststoffgranulate ist im Desodorierungssilo kein Vakuum notwendig. Daraus folgt:
- 5.4.1: Keine teure und komplizierte Anlagentechnik notwendig. Beispiel: Vermeidung von Ein- und Ausschleusorganen in ein Vakuum
- 5.4.2: Die Anlagen- bzw. Betriebskosten werden dadurch deutlich begrenzt.
- 5.5: Weitere Additive werden für eine zusätzliche Geruchsreduktion nicht benötigt.
- 5.5.1: Keine weiteren Zuschlagsstoffe (Additive) notwendig. Die dafür notwendige Anlagentechnik (Dosieren/Verwiegen/...) wird nicht benötigt. Die Anlagen- bzw. Betriebskosten werden dadurch deutlich begrenzt.
- 5.6.: Kundenspezifisches Design und Auslegung bezüglich Desodorierungstemperatur, Schüttgutmassenstrom, Verweilzeitdauer, Verdünnungsgrad und Größe der Desodorierungssilo(s) ist vorgesehen.

### 6. Desodorierungstemperatur

Die Deodorisierungstemperatur bezeichnet den Punkt, an dem der Entgasungsprozess am schnellsten abläuft. Je höhere diese Temperatur, desto schneller können die flüchtigen Anteile aus dem Granulat entfernt werden. Hierbei muss jedoch der Erweichungspunkt des Kunststoffes berücksichtigt werden.

Die hier angegebenen typischen Temperaturbereiche sind nur als Anhaltswerte zu betrachten. Die individuelle Auslegung der Temperaturbereiche erfolgt entsprechend der Produktanforderung:

| | |
|---|---|
| LDPE: | 95 - 100°C |
| HDPE: | 115 - 120 °C |
| PP (low): | 90 °C |
| PP (high): | 135 °C |
| POM: | 140 °C |

### 7. Schüttgutmassenstrom

Bevorzugte Parameter sind 1 t/h, 2 t/h, 4 t/h - Y

Größere Massenströme Y problemlos möglich, da modulares Baukastenprinzip. Die individuelle Auslegung erfolgt gemäß den Produktanforderungen.

### 8. Verweilzeitdauer

Bevorzugte Parameter sind X, 8 h - 12 h, Y

Kürzere X und längere Verweilzeiten Y problemlos möglich, da modulares Baukastenprinzip

Individuelle Auslegung gemäß Produktanforderungen

### 9. Verdünnungsgrad Desodorierung

Bevorzugte Parameter sind X, 0,4 - 2,0, Y [kg Granulat / kg Luft]

Kleinere Y oder höhere Verdünnungsgrade X problemlos möglich, da modulares Baukastenprinzip

Individuelle Auslegung gemäß Produktanforderungen

10. Resultierende Größen der Desodorierungssilo(s) aus den Parametern Massenstrom, Verweilzeitdauer & Verdünnungsgrad bei einem bevorzugten Bruttovolumen von 18 - 200 m3 bis Y

Größere Desodorierungssilo Y sind problemlos möglich, da modulares Baukastenprinzip. Die individuelle Auslegung erfolgt gemäß den Produktanforderungen

### 11. Vorteile

Flexibilität beginnend bei der Anlagenauslegung;

Kostenoptimierte Gesamtanlage;

Individuelle Auslegung gemäß den Kundenanforderungen;

Sehr hohe Prozesssicherheit & hohe Granulat-Qualität;

Die Desodorierungsanlage kann auf Granulat Spezifikation bzw. Produktanforderung individuell ausgelegt werden.

### 12. Entgasungsqualität

Die Bewertung der Reinigungseffizienz von Recyclingprozessen erfolgt durch einen Challenge-Test.

Ein Challenge-Test bewertet die Reinigungseffizienz von Recyclingprozessen in Bezug auf migrationsrelevante postconsumer-Substanzen. Ein solcher Test ist beispielsweise beim "bottle-to-bottle" Recycling von gebrauchten PET-Flaschen erforderlich. Der Challenge-Test dient auch zur Optimierung von Recyclingprozessen und kann auf sortenreines Recyclingmaterial angewandt werden

### 13. Qualität der Gesamtanlage

Das Gesamtsystem "DEO-C - Desodorierungsanlage - Kontinuierlich" ist ein System nach einem modularem "Baukastenkonzept" und besteht aus mehreren Untersystemen.

13.1 Die erfindungsgemäße Trennung der Prozessschritte der Granulataufbereitung durch
1. Aufheizen,
2. Entgasen,
3. Abkühlen
führt wegen der damit verbundenen Flexibilität zu einer Standardisierung der Systeme. Daraus erfolgt eine Reduzierung von Zeit & Kosten bei der Projektierung und bei der Herstellung, Montage & IBN. Die Anlagen- bzw. Betriebskosten werden dadurch deutlich begrenzt. Dadurch entstehen kurze Lieferzeiten von der Bestellung bis zur IBN

### 14. Sicherheit

14.1 Hohe Mechanische Sicherheit beim laufenden Betrieb der Gesamtanlage: Es sind keine beweglichen Teile im installierten Zustand greifbar.

Dadurch ergibt sich eine hohe Betriebssicherheit für das Bedienpersonal und geringe Personalausfallkosten

### 15. Bevorzugte prozesstechnische Rahmenbedingungen

Diese Prozessbeschreibung definiert die verfahrenstechnische Betriebsweise einer kontinuierlichen Desodorierungsanlage, einschließlich der zu überwachenden und zu regelnden Betriebszustände und zulässigen Betriebsfenster.

Desodorierungsanlagen können zum Beispiel als Einzelsysteme ("stand alone") in Neuanlagen eingesetzt werden, aber auch eine Nachrüstung in bestehende Anlagen im Zuge einer "Modernisierung" ist möglich. Die Kunststoffgranulate werden kontinuierlich der Desodorierungsanlage zugeführt (Beispiel Extruder-Abförderung). Die Desodorierung entfernt flüchtige organische Verbindung (VOC) aus den Kunststoffen. Das Kunststoffgranulat wird zunächst auf die benötigte Prozesstemperatur (Desodorierungstemperatur) erhitzt. Anschließend wird das Granulat für eine bestimmte Verweilzeit in einem Desodorierungssilo mit Luft oder einem geeigneten Gas durchspült. Die Luft nimmt die flüchtigen Fremdstoffe auf. Abschließend wird das Produkt für die/den weitere Verarbeitung/Transport gekühlt. Das Desodorierungssystem kann in verschiedenen Varianten ausgeführt werden. Durch Energierückgewinnung und Wärmeisolation werden bessere Wirkungsgrade erzielt.

Die Schüttdichten der Kunststoffgranulate, zum Beispiel der ReGranulate liegen zwischen 500 kg/m³ - 600 kg/m3. Eine typische Chargengröße für den kontinuierlichen Normalbetrieb mit Produktversorgung vom Extruder liegt bei etwa 150 bis 300 t/Charge bei maximal 2000 kg/h Massenstrom. Natürlich sind auch kleinere Produktmassenströme von etwa 600 kg/h genauso erzielbar wie auch größerer Durchsätze.

Generell richtet sich die Anlagenauslegung nach dem geforderten Produktmassenstrom, den Schüttguteigenschaften und somit nach der benötigten Prozesstemperatur (Desodorierungstemperatur) für eine schnelle und betriebssichere Entgasung. Die Teilstromrückführung hängt ab von der gewünschten oder maximal zulässigen Aufkonzentrierung der Abluft. Auch muss die Häufigkeit eines Chargenwechsels oder die Chargengröße selbst berücksichtigt werden. Natürlich spielt die Energierückgewinnung eine immer wichtigere Rolle.

Die Beschickung der Desodorierungsanlage kann gravimetrisch (Schwerkraft) oder über eine pneumatische Förderung bevorzugt in aufgerauten Förderleitungen im Saug- oder Druckbetrieb erfolgen. Häufig erfolgt die Beschickung mit Hilfe einer pneumatischen Flugförderung mit max. 28 m/s Förderluftgeschwindigkeit.

Die Produkttemperatur nach dem Extruder und vor dem Eintritt in die Desodorierungsanlage beträgt normalerweise zwischen +45°C und +60°C. Die Desodorierungsanlage ist für die Kunststoffgranulate PE-HD, PE-LD, PP, und PS generell geeignet. Die maximal zulässige Temperatur im Prozess ist aber schüttgutabhängig.
Eine Kontamination von Kunststofftypen untereinander sollte ausgeschlossen bzw. minimiert werden. Falls Kunststofftypen mit niedrigerer Erweichungstemperaturen (LDPE, PS usw.) in Kunststofftypen mit höherer Erweichungstemperaturen eingemischt werden, können sich bei höheren Temperaturen Agglomerate bilden. Anbackungen, Verstopfungen sind in diesem Fall dann nicht auszuschließen.
Alle Förderleitungen haben bevorzugt eine aufgeraute Oberfläche. Damit erfolgt eine Verhinderung von Engelshaar, das sich z. B. in der Rohrleitung bei der Förderung Charge A (niedriger Schmelzpunkt) aufgebaut hat und bei Förderung Charge B (hoher Schmelzpunkt) ablöst. Somit Verhinderung einer Produktverschleppung von Charge A in Charge B.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Schematisiert und vereinfacht eine erste Ausführung einer Desodorierungsanlage
Figur 2: Eine zweite Ausführung einer Desodorierungsanlage
Figur 3: Ein Verfahrensschema einer Desodorierungsanlage in Vollausstattung.

Zunächst werden einzelne Module der Anlage beschrieben und im Anschluss daran die Verfahrensmerkmale, wobei für die gleichen Teile die gleichen Bezugszeichen gelten.

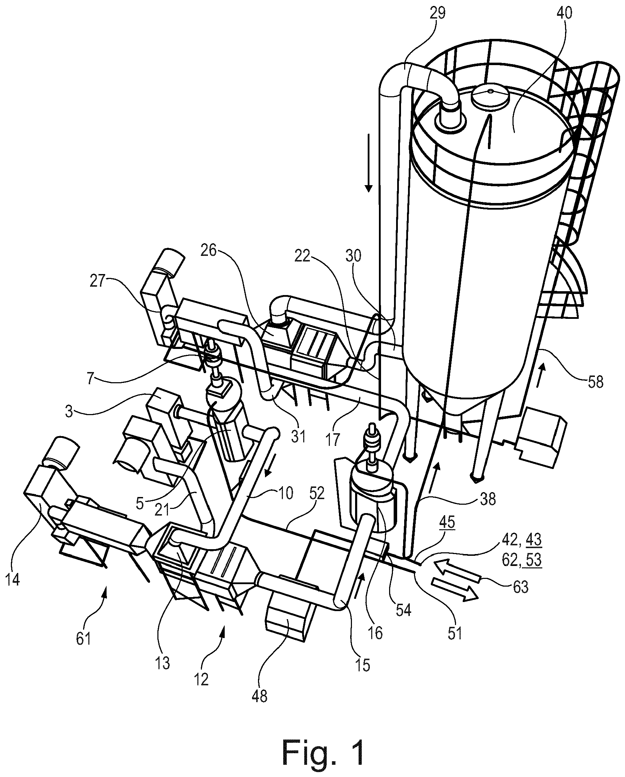

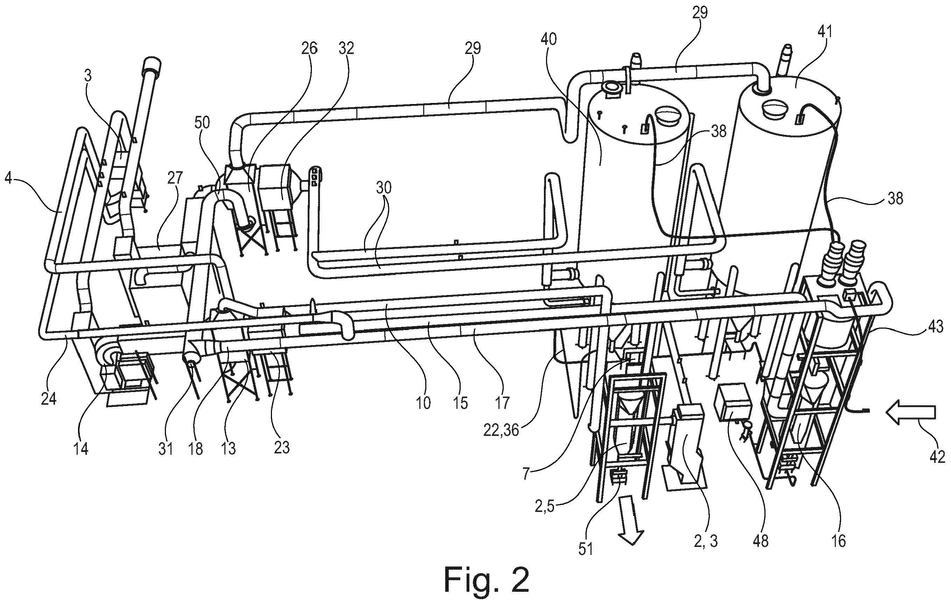

### Granulat Zuführung (Figuren 1-3):

Hauptausrüstungen: Zyklon 43, Vorlagebehälter 53, Zellenradschleuse 44, Granulaterhitzer 16, Zellenradschleuse 54,

### Granulatbeschickung vom Extruder (Normalbetrieb)

Mittels einer pneumatischen Flugförderung (Bsp. 500 m³/h) wird das ReGranulat 62 kontinuierlich zwischen einem minimalen und einem maximalen Massenstrom (Bsp. 1.000 - 2.000 kg/h) von der Extrusion dem Zyklon 43 in Pfeilrichtung 63 (siehe Fig. 4) zugeführt. Im Normalbetrieb (Zuführung des ReGranulates 62 aus der Extrusion) wird der optionale Vorlagebehälter 53 im Durchlauf - d.h. ohne Granulatspeicherung - betrieben.

Die Zellenradschleuse 44 läuft hierzu mit erhöhter Drehzahl.

Ein Rückstau/Überfüllung durch fehlende/unzureichende Granulatabführung der Ausrüstungen stromabwärts wird durch die Füllstandsmessung im Zyklon 43 überwacht. Sie stoppt die Granulatzuführung zum Zyklon 43 bzw. zum optionalen Vorlagebehälter 53. Eine Unterbrechung der Granulatzufuhr von der Extrusion ist auch bei Ansprechen der Überfüllsicherung im optionalen Vorlagebehälter 53 erforderlich.

### Granulatbeschickung mittels Big-Bags

Außerhalb des Normalbetriebes (kontinuierlichen Zuführung aus der Extrusion) kann optional Granulat aus Big-Bags über Saugfördergeräte in den dann notwendigen Vorlagebehälter 53 zugeführt werden (hier nicht dargestellt). Hier dient die kontinuierliche Füllstandsmessung und Grenzwerterfassung im optionalen Vorlagebehälter 53 dem Bediener/der Steuerung des Saugfördergerätes als Rückmeldung, wann die Big-Entleerung zu stoppen ist bzw. rechtzeitig wieder aufzunehmen ist. Dies ist für eine kontinuierliche Zuführung des ReGranulates 62 zur Produkterhitzung erforderlich. Der Massenstrom für die Versorgung der Anlage mit Big-Bags ist normalerweise reduziert. Die Granulat Eingangstemperatur aus den Big-Bags ist geringer als bei der kontinuierlichen Zuführung von der "heißen" Extrusion.

### Granulaterhitzung

Hauptausrüstungen: Granulaterhitzer 16, Zellenradschleuse 54, Filtereinheit 20, Ventilator 14, Rekuperator 13, Lufterhitzer 23

Der Granulaterhitzer 16 erfordert einen Mindestfüllstand des ReGranulates 62 im oberen Bereich für seine Funktion/Erbringung der Heizleistung. Dies wird durch die kontinuierliche Füllstandsmessung im Einlaufbereich des Granulaterhitzers 16 und der daraus folgenden Drehzahlanpassung der Schleuse 54 am Austritt gewährleistet.

Nach dem Ventilator 14 wird die Luft auf der Druckseite durch den Rekuperator (Luft/Luft Wärmeaustauscher) 13 vorgewärmt und anschließend im Lufterhitzer 23 noch weiter erhitzt. Die Regelung der Zieltemperatur der Erhitzungsluft erfolgt zum Beispiel über die Regelung der Dampfzuführung beim Lufterhitzer 23. Die Zieltemperatur darf produktabhängig nicht überschritten werden, um eine Überhitzung/Erweichung des Granulates im Granulaterhitzer 16 auszuschließen. Eine zu hohe Lufttemperatur kann zur (lokalen) Erweichung und Agglomeration von Schüttgut im Granulaterhitzer 16 führen und kann den Prozess erheblich stören. In einer anderen Ausgestaltung kann der Rekuperator 13 entfallen und die heiße - bevorzugt gefilterte - Abluft des Granulatkühlers 5 kann direkt in die Heißgasleitung 15 eingeführt werden, wodurch der Granulaterhitzer 16 direkt von der Abwärme des Granulatkühlers beheizt wird. In diesem Fall könnte die Luftaufbereitung 61 entfallen.

### Förderung von der Granulaterhitzung zu den Desodorierungssilos

Hauptausrüstungen: Gebläse 48, Sicherheitsfilter 55, Weiche 47, Zellenradschleuse 54, Desodorierungssilo 40 & 41

Es kann nur eines der beiden Desodorierungssilo 40 oder 41 zur gleichen Zeit befüllt werden.

### Desodorierungssilos und deren Versorgung mit Luft

Hauptausrüstungen: Desodorierungssilo 40 & 41, Ventilator 27, Rekuperator 26, Lufterhitzer 32, Zellenradschleusen 56 & 57, Injektor-Umförderung 22, Granulatkühlung 5.

### Normalbetrieb

Im kontinuierlichen Normalbetrieb wird eines der beiden Desodorierungssilos (40 oder 41) mit Granulat befüllt und gleichzeitig über die Zellenradschleuse 56 oder 57 entleert. Zum Beispiel wird sich in diesem Fall, bei einem Massenstrom von 2 t/h und einem maximalen Siloinhalt von 20 t, ein einzelnes Granulatkorn in einer stabilen Granulatschicht in einem Schüttgut-Festbett langsam über 10 Stunden von oben Eintritt bis nach unten Austritt durch das Silo 40, 41 hindurchbewegen. Zum Erreichen und Regeln der Verweilzeit des Granulates im Desodorierungssilo 40 oder 41 muss der Füllstand im Silo konstant gehalten werden. Die definierte Verweilzeit im Normbetrieb ist in diesem Fall 10 h. Der eingeregelte Normalzustand ist ein Silo mit ca. min. 95% Füllung. Die Sicherstellung der geforderten Füllstandshöhe im Desodorierungssilo ist durch Anpassung und Regelung der Drehzahl der Austragsschleusen 56 bzw. 57 sicherzustellen.

Die Desodorierungsluft wird über den Ventilator 27 zugeführt und über den Rekuperator (Luft/Luft-Wärmeaustauscher) 26 vorgewärmt. Die notwendigen Desodorierungsluftmengen werden durch Ventile (Klappen) zu den Einblasstellen an den Desodorierungssilos 40 & 41 geleitet. Die warme, mit Geruchsstoffen belastete Abluft aus den Desodorierungssilos 40, 41 wird dem Rekuperator 26 wieder zugeführt (erfindungsgemäße Energierückgewinnung) und gelangt anschließend in eine Abluftbehandlung.

Desodorierung-Lufttemperatur: Der Sollwert ist produktabhängig einstellbar. Der Istwert ist über die Regelung der Dampfzufuhr beim Lufterhitzer 32 und die Lufttemperaturmessungen zu regeln und zu überwachen. Dies ist prozesskritisch. Eine zu hohe Lufttemperatur kann zur (lokalen) Erweichung und Agglomeration von Produkt im Silo (und somit zum Verstopfen des Siloaustrages) führen.

### Temporäre Betriebszustände

Eine gestörte Abförderung erfordert eine Umförderung:
Ein Verweilen von heißem Granulat ohne Austrag aus dem Desodorierungssilo 40 oder 41 ist nur für kurze Zeit (ca. max. 30 Minuten) zulässig, da sich im unbewegten Schüttgut-Festbett des Desodorierungssilos Agglomerate bilden (können). Zur Vermeidung ist die temporäre Injektor-Umförderung 22 mit kleinem Fördermassenstrom zu betreiben (Bsp. 200 - 250 kg/h - ggf. intermittierend für jeweils min. 30 Minuten) um das Schüttgut-Festbett zu aktivieren.

Bei längerem Stillstand des Siloinhaltes mit heißem Granulat ist die Temperatur der Desodorierungsluft zusätzlich signifikant abzusenken. Dies ersetzt nicht die Injektor-Umförderung 22, bis eine hinreichend niedrige Granulattemperatur im ganzen Silo erreicht ist, um eine Agglomeration des Granulates durch hohe Temperaturen und Schüttungsdruck im unbewegten Schüttgutbett (Festbett) auszuschließen.

### Umschalten zwischen den Desodorierungssilos 40 und 41

Der kontrollierte Übergang von einem auf das andere Desodorierungssilo 40, 41 ist nur bei Batch/Produktwechsel vorgesehen. In diesem Übergangszeitraum wird aus dem nicht mehr kontinuierlich befüllten Silo, das Granulat aus dem Silo kontrolliert ausgetragen und pneumatisch zur Granulatkühlung 5 bzw. Verpackung gefördert (Bsp. max. 2000 kg/h). Gleichzeitig erfolgt nun die Silobefüllung des zweiten Desodorierungssilos. Die Desodorierungsluftmenge muss in diesem Übergangszeitraum auf die zwei Desodorierungssilos aufgeteilt werden (z. B. bezogen auf die jeweilige Granulatbefüllung je Silo).

### Austragsförderung aus den Desodorierungssilos 40, 41

Hauptausrüstungen: Desodorierungssilo 40 & 41, Gebläse 49, Sicherheitsfilter 59, Zellenradschleusen 56 & 57, Zyklon 60, Granulatkühler 5.

Im Normalbetrieb wird eines der beiden Desodorierungssilos 40 oder 41 kontinuierlich befüllt und gleichzeitig entleert.

### Granulatkühlung

Hauptausrüstungen: Zyklon 60, opt. Zellenradschleuse 7, Granulatkühler 5, Zellenradschleuse 6, Ventilator 3, Rekuperator 13.

Der Granulatkühler 5 erfordert einen Mindestfüllstand des Granulates im oberen Bereich für seine Funktion/Erbringung der Kühlleistung. Dies wird durch die kontinuierliche Füllstandsmessung im Einlaufbereich des Granulatkühlers 5 und der daraus folgenden Drehzahlanpassung der Schleuse 6 am Austritt gewährleistet.

Die Granulataustrittstemperatur wird überwacht und bei Überschreitung eines Grenzwertes wird alarmiert. Die Kühlluftmenge des Ventilators 3 wird konstant gehalten. Drehzahlregelung und Luftmengenmessung kompensieren verschiedene Ansauglufttemperaturen. Für eine optimale Wärmerückgewinnung wird der im Granulatkühler 5 erwärmte Luftstrom in der Gasleitung 10 für die Granulaterwärmung am Anfang der Desodorierungsanlage verwendet. Im Rekuperator (Luft/Luft Wärmeaustauscher) 13 wird die Abwärme an den Gasvolumenstrom für den nachfolgenden Granulaterhitzer 16 übergeben. Anschließend gelangt der Luftstrom in der Gasleitung 10 in die Atmosphäre.

### Förderung zur Lagerung/Verpackung

Hauptausrüstungen: Granulatkühler 5, Zellenradschleuse 6.

Das Produkt aus dem Granulatkühler 5 wird über die Zellenradschleuse 6 übergeben.

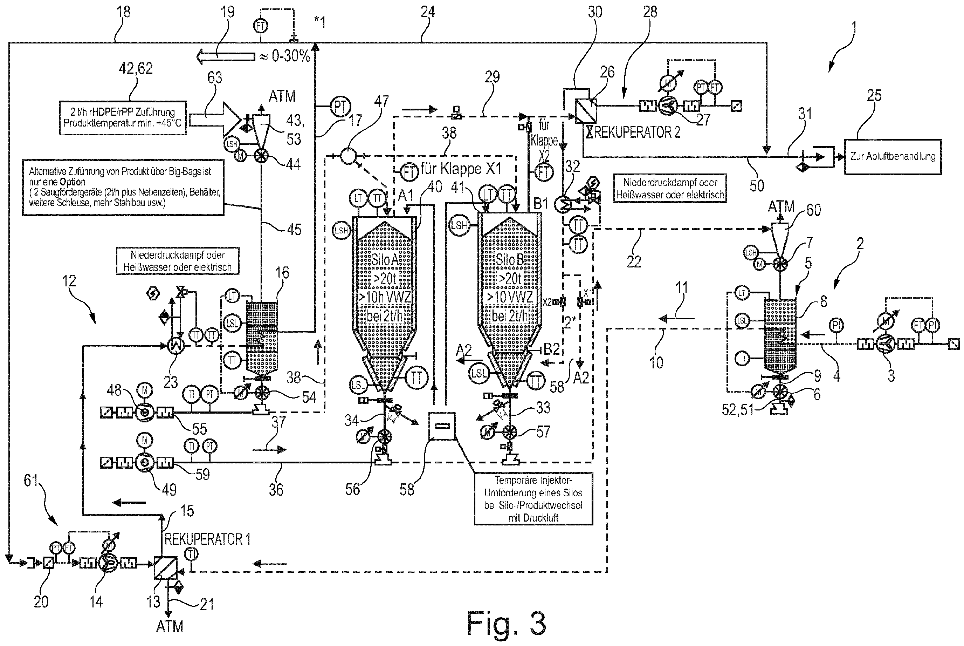

Nachfolgend wird eine bevorzugte Ausgestaltung der Anlage anhand des Anlagenschemas nach Figur 3 näher erläutert.

Die Desodorierungsanlage 1 besteht im Wesentlichen aus einem ausgangsseitigen Kühlzweig 2, in dem das heiße, den Prozess verlassende Granulat 8, welches das eine oder die mehreren Desodorierungssilos 40, 41 verlässt, durch Frischluft abgekühlt wird, die von einem Ventilator 3 über die Leitung 4 in den Granulatkühler 5 eingeleitet wird und das heiße Granulat 8 durchströmt. Dadurch entsteht am Auslass des Granulatkühlers 5 ein heißer Luftstrom, der über die Gasleitung 10 zur Aufheizung des eingangsseitig angeordneten Rekuperators 13 verwendet wird, der seinerseits den eingangsseitigen Granulaterhitzer 16 heizt, in dem die eingangsseitig in den Prozess eintretenden ReGranulate erhitzt werden. Als Produktauslass des Granulatkühlers 5 ist ein elektromotorisch betriebener Schieber vorhanden, der über eine Zellenradschleuse 6 eine gesteuerte Abförderung 50 des fertig bearbeiteten Granulats über die Abfuhrleitung 52 ermöglicht.

Als Beispiel kann angegeben werden, dass zwei Tonnen pro Stunden Abführleistung möglich sind und die Produkttemperatur maximal + 60 Grad Celsius bei maximal 30 Grad Celsius Ansaugung der Kühlluft vorhanden sein kann.

Jedes Desodorierungssilo 40, 41 hat eine sogenannte Injektor-Umförderung 58, bei der ein Teil des Granulats aus dem Auslasszweig 33, 34 vor der jeweiligen Zellenradschleuse, 56, 57 ausgeschleust werden kann, um über separate Leitungen wieder in den Deckenbereich (Eingang) des jeweiligen Silos 40, 41 gefördert zu werden.

Am Auslass des Desodorierungssilos, 40, 41 ist ein motorisch angetriebener Schieber angeordnet, der über den Produktauslass 33, 34 eine kontinuierliche Menge heißen Granulats auf die Zellenradschleuse 56, 57 fördert. Falls zwei Desodorierungssilos 40, 41 vorhanden sind können die Zellenradschleusen 56, 57 das jeweilige Granulat entweder parallel zusammen oder einzeln hintereinander in die Heißgranulat-Leitung 22 fördern.

Vom Auslass der beiden Desodorierungssilos 40 und 41 wird das heiße Granulat über eine Heißgranulatleitung 22 über eine optional vorhandene Zellenradschleuse 7 in den Zyklon 60 gefördert, wobei im Zyklon 60 die Luft vom heißen Granulat getrennt wird, um eine dichtere Granulatschüttung zu erreichen.

Die Aufheizung und Spülung der im Innenraum des einen oder der beiden Desodorierungssilos 40, 41 im Festbett befindlichen Granulatschüttung mit einem heißen Spülgas erfolgt über jeweils eine Spülgasleitung 30, die in den Konusbereich des jeweiligen Desodorierungssilos 40, 41 mündet und dort einen heißen, die Granulatschüttung durchsetzenden Spülgasstrom erzeugt.

Die für das heiße Spülgas erforderliche Luft wird über einen Ventilator 27 aus der Atmosphäre angesaugt und zur Aufheizung über einen Rekuperator 26 geleitet, der von der Abluft, die von der Siloabluftleitungen 29 stammt, aufgeheizt wird.

Dadurch erfolgt im Rekuperator 26 eine Vorwärmung des Spülgases, das über eine Spülgasleitung 30, die noch zusätzlich einen mit bevorzugt elektrischer Fremdenergie betriebenen Lufterhitzer 32 aufweisen kann, in den Konusbereich des einen oder der beiden Desodorierungssilos 40, 41 mündet.

Der Lufterhitzer 32 ist optional vorhanden und kann ggf. auch entfallen.

Demnach wird das heiße Spülgas über die Spülgasleitung 30 entsprechend den Pfeilsymbolen A2 und B2 wahlweise parallel oder hintereinander folgend in den Konusbereich der beiden Desodorierungssilos, 40, 41 geblasen.

Dadurch entsteht im Konusbereich eine nach oben gerichtete - im zu spülenden Granulat aufsteigende - Wärmesäule aus erhitztem Spülgas, die das gesamte Granulat durchströmt. Die Spülgasleitung 30 erlaubt die Verzweigung entweder parallel auf beide Desodorierungssilos 40, 41 oder auch einen abwechselnden Betrieb, bei dem ein Desodorierungssilo 40 oder 41 mit Heißluft versorgt wird, während das andere Desodorierungssilo 41, 40 entleert wird und deshalb nicht vom Spülgas durchströmt wird.

Nachfolgend wird die Granulatzuführung von zu bearbeitenden Regranulat 62 beschrieben.

Aus der Produktzufuhr 42, bei der zum Beispiel eine Produktmenge von zwei Tonnen pro Stunden bei einer Produkttemperatur von 45 Grad Celsius zugeführt werden kann, erfolgt die Produktzufuhr auf einen Zyklon 43, an dessen Ausgang eine Zellenradschleuse 44 angeordnet ist. Der Zyklon 43 dient zur Entgasung des zugeführten Produktes, um einen möglichst hohe Produktdichte am Ausgang der Zellenradschleuse 44 auf der Speiseleitung 45 zu erreichen. Das so zugeführte Produkt wird in einen Granulaterhitzer 16 geleitet, der bevorzugt als Querstromwärmetauscher ausgebildet ist.

Die Energiezufuhr für Heizung des Granulaterhitzers 16 erfolgt über eine Leitung 15. In der Leitung 15 kann optional ein elektrisch betriebener Lufterhitzer 23 vorhanden sein.

Eine wesentliche Energieeinsparung bei der Erzeugung der Heißluft in der Gasleitung 15 für den Granulaterhitzer 16 wird durch Verwendung eines Rekuperators 13 erreicht, der von Abwärme des ausgangsseitig angeordneten Granulatkühlers 5 beheizt ist.

Die Abwärme des Granulatkühlers 5 wird über die Gasleitung 10 dem Rekuperator 13 zugeführt, der mit dieser Abwärme den eingangsseitigen Luftstrom auf der Gasleitung 15 aufheizt, der durch den Granulaterhitzer 16 hindurchgeführt wird.

Am Ausgang des Granulaterhitzers 16 gelangt die im Granulaterhitzer 16 abgekühlte Abluft entweder über eine Abluftleitung 21 ins Freie oder wird über die Abluftleitung 17 in eine zentrale Abluftleitung 24 geführt, wo sie über die Abluftleitung 31 einer Abgasnachbehandlung 25 zugeführt wird

Zur weiteren Energieeinsparung trägt bei, dass die den Granulaterhitzer 16 verlassende Abluftleitung 17 einen noch aufgeheizten Teilstrom in Pfeilrichtung 19 in eine Rückführleitung 18 führt, die in die Luftaufbereitung 61 für den Rekuperator 13 mündet. Damit erzeugt der in der Luftaufbereitung 61 angeordnete Ventilator 14 mit seiner vorgeschalteten Filtereinheit 20 eine Luftvorwärmung für die in der heißen Gasleitung 15 strömende Luft, die dem Granulaterhitzer 16 zugeführt wird.

Demnach wird in einer bevorzugten Ausgestaltung über die Abluftleitung 17 lediglich eine bevorzugte Luftmenge von 0 bis 30 % in die Rückführleitung 18 gefördert, während der Hauptteil der Abluft aus der Abluftleitung 17 in die zentrale Abluftleitung 24 gefördert wird, wo sie mit der Abluft der Desodorierungssilos 40, 41 über die Leitung 50 zusammengeführt wird und als Abgasleitung 31 einer Abgasnachbehandlung 25 zugeführt wird.

Das Abgasrückführung aus der den Granulaterhitzer 16 verlassenden Abluftleitung 17 in die Rückführleitung 18 auf den Eingang der Luftaufbereitung 61 ist eine bevorzugte Ausführung, die von Anwendungsfall zu Anwendungsfall auch entfallen kann.

Ein anderer Anwendungsfall der vorliegenden Erfindung sieht dann vor, dass die Rückfuhrleitung 18 entfällt und dass der Ventilator 14 über die Filtereinheit 20 Frischluft aus der Atmosphäre ansaugt, verdichtet und über die Vorwärmung im Rekuperator 13 in die Gasleitung 15 einspeist, wobei dieser Zweig insgesamt als Heizzweig 12 bezeichnet wird, über den die heiße Luft in den Granulaterhitzer 60 geführt wird.

Das in den Desodorierungssilos 40, 41 aufbereitete Granulat gelangt über die auslassseitigen Produktauslässe 33, 34 und die Zellenradschleusen 56, 57 in die als Flugförderung arbeitende Abförderleitung 36.

Zur Lufterzeugung auf der Abförderleitung 36 wird ein geeigneter Luftstrom erzeugt, der Pfeilrichtung 37 durch die Abförderleitung 36 strömt. Der Luftstrom wird von einem Gebläse 49 erzeugt, welches über einen Sicherheitsfilter 59 die Luft aus der Atmosphäre ansaugt und verdichtet, um so einen geeigneten Luftstrom mit geeignetem Luftvolumen und Temperatur für die Flugförderung in der sich an die Abförderleitung 36 anschließenden Heißgranulat-Leitung 22 zu erzeugen.

Es wird festgestellt, dass ein bevorzugtes Merkmal der Erfindung darin liegt, dass eine Energieeinsparung bevorzugt im Bereich von 20 bis 30 % gegenüber herkömmlichen Anlagen dadurch möglich ist, dass die Abwärme des Granulatkühlers 5 über die Gasleitung 10 einem der Luftaufbereitung 61 dienenden Rekuperator 13 zugeführt wird, wobei diese Heißluft den Rekuperator 13 durchströmt und bevorzugt über die Abluftleitung 21 ins Freie geführt wird.

Durch diese Maßnahme wird erreicht, dass die wahlweise aus der Atmosphäre oder über die Rückführleitung 18 angesaugte Frischluft bereits schon vorgeheizt ist.

Dies führt dazu, dass das über die Gasleitung 15 im Heizzweig 12 strömende Heizmedium für die Beheizung des Granulaterhitzers 16 nur noch eine geringe elektrische Energie aus dem elektrischen Lufterhitzer 23 benötigt, der sogar in vielen Anwendungsfällen auch vollständig entfallen kann. Dadurch wird ein wesentlicher Teil von elektrischer Energie eingespart, der bei üblichen Anlagen nach dem Stand der Technik benötigt wird.

Bei der Erfindung ist auch bevorzugt, dass die entscheidenden Aggregate nebeneinanderliegend pneumatisch beschickt werden, dies gilt vor allem für den Granulaterhitzer 16 für die beiden Desodorierungssilos 40, 41, sowie für den im Kühlzweig 2 angeordneten Granulatkühler 5.

Durch die räumliche Nebeneinander-Anordnung der genannten Aggregate 16, 40, 41, 5 wird in der Praxis ein nebeneinander liegender Aufbau einer solchen Desodorierungsanlage 1 über eine bestimmte Raumfläche erzielt, weil die genannten Aggregate etwa auf der gleiche Höhe sind und durch pneumatische Fördermittel miteinander verbunden sind.

Darauf ist die Erfindung jedoch nicht beschränkt. Es kann in einer anderen bevorzugten Ausgestaltung vorgesehen sein, dass der Granulaterhitzer 16 und der Granulatkühler 5 auf vertikal unterschiedlichen Höhen als beispielsweise die Höhen der Desodorierungssilos 40, 41 liegen, sodass eine Schwerkraftförderung des Granulates stattfindet und keine Flugförderung, wie es im vorstehenden Ausführungsbeispiel am Beispiel der Abförderleitungen 36 und 22 beschrieben wurde.

Die nebeneinander Anordnung der genannten Aggregate 16, 40, 41, 5 dient vor allem zur Reduzierung der Bauhöhe. Wenn jedoch die Reduzierung der Bauhöhe keine Rolle spielt, kann es auch vorgesehen sein, dass beispielsweise der Granulaterhitzer 16 oberhalb des Desodorierungssilos 40, 41 angeordnet ist, während der Granulatkühler 5 auf gleicher Höhe wie die Desodorierungssilos 40, 41 darüber oder auch darunter angeordnet sein kann.

In einer einfachen Ausführungsform, die bereits schon im allgemeinen Teil beschrieben wurde, ist auch vorgesehen, dass nur ein einziges Desodorierungssilo 40 oder 41 vorhanden ist, was dem einfachsten Anlagenschema C entspricht. Auch bei einem solchen nur einzeln vorhandenen Desodorierungssilo 40 oder 41 ist ein kontinuierlicher Durchlauf möglich, wobei es bei Produktwechseln allerdings zu Produkt-Überschneidungen kommt, die dann beseitigt werden müssen oder die in Kauf genommen werden.

Der Parallelbetrieb von zwei Desodorierungssilos 40,41 hat demnach den Vorteil, dass auch bei Chargenwechsel ein kontinuierlicher Durchlaufbetrieb möglich ist, weil beispielsweise im einen Desodorierungssilo 40 die Entgasung und Aufbereitung des Granulats erfolgt, während im anderen Desodorierungssilo 41 der Auslass des Heißgranulats erfolgt. Dies hat den Vorteil, dass das heiße Granulat aus dem Desodorierungssilo 41 für die Luftaufbereitung des Granulats im Desodorierungssilo 40 genutzt werden kann, wodurch auch eine wesentliche Energieeinsparung gegeben ist.

Der Unterschied zum Stand der Technik liegt bei der Erfindung demnach darin, dass im Kühlzweig 2 mit einem Granulatkühler 5 gearbeitet wird, der bevorzugt als Luftwärmetauscher ausgebildet ist und dessen Abluft über die Gasleitung 10 zur Vorwärmung eines in der Luftaufbereitung 61 angeordneten Rekuperators 13 verwendet wird, wodurch wesentliche Energie bezüglich der Luftvorwärmung für den Granulaterhitzer 16 eingespart wird.

Von Vorteil ist, dass am luftführenden Ausgang des Granulatkühlers 5 auf der Gasleitung 10 etwa das gleiche Temperaturniveau vorliegt, welches auch am Eingang des Granulaterhitzers 16 auf der Leitung 15 für die dortige Granulaterwärmung benötigt wird. Das gelingt mit dem zwischen der Gasleitungen 10 und 15 angeordneten Rekuperator 13, der von den Abgasen des Granulatkühlers 5 geheizt ist.

Zusammenfassend hat die Erfindung gegenüber dem Stand der Technik folgende Vorteile und Merkmale:
1. Die nahezu vollständige Geruchsreduzierung von Recycling-Granulate (ReGranulate). Im Bereich der "post-consumer" Kunststoffe sind das hauptsächlich die Kunststoff Typen PE-HD, PE-LD, PP, und PS, die aus den Leichtverpackungsabfällen (LVP) wieder dem Herstellungsprozess zugeführt werden.
2. Die nahezu vollständige Geruchsreduzierung nach der Herstellung von Kunststoffcompounds (Beimischungen von Additiven und Füllstoffen).
3. Keine unerwünschten Schüttgutveränderungen während der Desodorierung. Gleichbleibend hohe Granulat-Qualität.
4. Sehr hohe Flexibilität beginnend bei der Anlagenauslegung bis zur Inbetriebnahme der Anlage.
5. Kundenspezifisches Design und Auslegung bezüglich Desodorierungstemperatur, Schüttgutmassenstrom, Verweilzeitdauer, Verdünnungsgrad und Größe der Desodorierungssilo(s).
6. Energiesparende Wärmeisolation aller Anlagenteile und die Energierückgewinnung über Rekuperatoren (Luft/Luftwärmeaustauscher) 13, 26 verhindert erheblich den Wärme- bzw. Energieverlust.
7. Kompakter & hocheffizienter Querstromwärmeaustauscher 5, 16 für Schüttgüter. Trennen der Prozessschritte: Granulat Aufheizen, Entgasen & Abkühlen
8. Zuverlässige Verhinderung von Schüttgut-Agglomeraten in den Desodorierungssilos 40, 41.
9. Prozesssichere, kostenoptimierte Gesamtanlage mit langer Standzeit und langer Lebensdauer

### Bezugszeichenliste

- 1: Desodorierungsanlage
- 2: Kühlzweig
- 3: Ventilator
- 4: Leitung
- 5: Granulatkühler
- 6: Zellenradschleuse
- 7: Zellenradschleuse
- 8: Schüttgut
- 9: Auslass
- 10: Gasleitung
- 11: Pfeilrichtung
- 12: Heizzweig
- 13: Rekuperator
- 14: Ventilator
- 15: Gasleitung (heiß)
- 16: Granulaterhitzer
- 17: Abluftleitung
- 18: Rückführleitung
- 19: Pfeilrichtung
- 20: Filtereinheit
- 21: Abluftleitung
- 22: Heißgranulat-Leitung
- 23: Lufterhitzer
- 24: Abluftleitung
- 25: Abgasnachbehandlung
- 26: Rekuperator
- 27: Ventilator
- 28: Spülgaszweig
- 29: Silo-Abluftleitung
- 30: Spülgasleitung
- 31: Abgasleitung
- 32: Lufterhitzer
- 33: Produktauslass
- 34: Produktauslass
- 35 36: Abförderleitung
- 37: Pfeilrichtung
- 38: Heißgranulatleitung
- 39 40: Desodorierungssilo
- 41: Desodorierungssilo
- 42: Produktzufuhr
- 43: Zyklon
- 44: Zellenradschleuse
- 45: Speiseleitung
- 46 47: Weiche
- 48: Gebläse
- 49: Gebläse (Heiß)
- 50: Leitung
- 51: Abförderung
- 52: Abfuhrleitung
- 53: Vorlagebehälter
- 54: Zellenradschleuse
- 55: Sicherheitsfilter
- 56: Zellenradschleuse
- 57: Zellenradschleuse
- 58: Injektor-Umförderung
- 59: Sicherheitsfilter
- 60: Zyklon
- 61: Luftaufbereitung
- 62: ReGranulat
- 63: Pfeilrichtung

## Patentansprüche

1. Verfahren zur Desodorierung von Recycling-Granulaten zur Entfernung flüchtiger organischer Verbindungen (VOC) durch Wärme- und/oder Gasbehandlung in mindestens einem Desodorierungssilo (40, 41) mit folgenden Verfahrensschritten:
1.1 Behandeln der Granulate (62) im Desodorierungssilo (40, 41) bei einer Desodorierungstemperatur, die bei oder unter dem Erweichungspunkt der Granulate (62) liegt;
1.2 Halten der Granulate (62) auf der Deodorierungstemperatur;
1.3 Ausspülen volatiler Materialien aus den Granulaten (62) aus dem Desodorierungssilo (40, 41) durch Spülung der Produktfüllung (36) im Desodorierungssilo (40, 41) mittels eines erhitzten Spülgases;
1.4 Kühlen der Granulate (62),
**dadurch gekennzeichnet, dass**
das Aufheizen von prozess-eingangsseitigen ReGranulaten (62) im Prozessschritt 1.1 in einem Granulaterhitzer (16) erfolgt, der seine Prozesswärme von einem eingangsseitigen Rekuperator (13) erhält, der von der Abwärme eines ausgangsseitigen Granulatkühlers (5) beheizt wird oder dass die heiße Abluft des Granulatkühlers (5) direkt in den Granulaterhitzer (16) eingeleitet wird.

2. Verfahren nach Anspruch 1, **dadurch gekennzeichnet, dass** die Kühlung der im Verfahrensschritt 1.4 am Ausgang des einen oder der mehreren Desodorierungssilos (40, 41) anfallenden gereinigten Granulats (8) im ausgangsseitigen Granulatkühler (5) erfolgt, der von kühler Frischluft durchsetzt ist, welche Frischluft nach Durchströmung des heißen Granulats (8) am Ausgang des Granulatkühlers (5) als aufgeheizter Luftstrom über eine Gasleitung (10) zur Erwärmung des eingangsseitig angeordneten Rekuperators (13) verwendet wird, welcher Rekuperator (13) zur Erwärmung des eingangsseitig angeordneten Granulaterhitzers (16) ausgebildet ist.

3. Verfahren nach Anspruch 1 oder 2, **dadurch gekennzeichnet, dass** das ReGranulat (62) auf die benötigte Desodorierungstemperatur innerhalb einer Verweilzeit durch Spülung mittels Spülgas erhitzt wird und dass anschließend innerhalb einer weiteren Verweilzeit mit einem gekühlten Spülgas gespült wird.

4. Verfahren zur Desodorierung von Recycling-Granulaten (ReGranulate 62) zur Entfernung flüchtiger organischer Verbindungen (VOC) durch Wärme- und/oder Gasbehandlung in mindestens einem Desodorierungssilo (40, 41) mit folgenden Verfahrensschritten:
1.1 Heizen der ReGranulate (62) im Desodorierungssilo (40, 41) auf eine Desodorierungstemperatur, die bei oder unter dem Erweichungspunkt der ReGranulate (62) liegt;
1.2 Halten der ReGranulate (62) auf der Deodorierungstemperatur;
1.3 Ausspülen volatiler Materialien aus den ReGranulaten (62) aus dem Desodorierungssilo (4) durch Spülung der Produktfüllung (36) im Desodorierungssilo (4) mittels eines erhitzten Spülgases;
1.4 Kühlen der ReGranulate (62),
**dadurch gekennzeichnet, dass**
die Wärme der Abluft des einen oder der mehreren Desodorierungssilos (40, 41) zur Erwärmung des Spülgases genutzt wird.

5. Verfahren nach einem der Ansprüche 1 bis 4, **dadurch gekennzeichnet, dass** nach dem Prinzip First-in / first- out bevorzugt annähernd alle Granulatkörner die gleiche Verweilzeit im Granulaterhitzer (16) und/oder im Granulatkühler (5) haben und/oder Desodorierungssilo haben .

6. Verfahren nach einem der Ansprüche 1 bis 5, **dadurch gekennzeichnet, dass** ein Aufschmelzen von Restmengen der Charge A (niedriger Schmelzpunkt) während des Betriebs der Charge B mit höheren Temperaturen verhindert wird.

7. Verfahren nach einem der Ansprüche 1 bis 6, **dadurch gekennzeichnet, dass** zur Vermeidung von Agglomeraten eine Umförderung der Granulatschüttung im Desodorierungssilo (40, 41) stattfindet, wenn kein Produkt ausgelassen wird.

8. Verfahren nach einem der Ansprüche 1 bis 7, **dadurch gekennzeichnet, dass** das ReGranulat (62) in einem ersten Schritt mit Hilfe eines als Querstromwärmeaustauscher ausgebildeten Granulaterhitzers (16) knapp unter die Erweichungstemperatur schonend erhitzt wird und in einem zweiten Schritt die Entgasung mit dem heißen Spülgas in dem separaten Desodorierungssilo (40, 41) stattfindet und dass in einem dritten Schritt die Kühlung des Granulates in einem weiteren als Wärmeaustauscher ausgebildeten Granulatkühler (5) auf eine für das nachfolgende System geeignete Temperatur stattfindet, wobei hochwertige Kunststoffgranulate entstehen.

9. Verfahren nach einem der Ansprüche 1 bis 8, **dadurch gekennzeichnet, dass** das prozess-eingangsseitige ReGranulat (62) mittels einer pneumatischen Flugförderung kontinuierlich zwischen einem minimalen und einem maximalen Massenstrom von einer externen Extrusion einem Zyklon (43) zugeführt wird.

10. Verfahren nach einem der Ansprüche 1 bis 9, **dadurch gekennzeichnet, dass** wahlweise eine einziges Desodorierungssilo (40, 41) oder zwei oder mehr Desodorierungssilos (40, 41) vorhanden sind.

11. Verfahren nach Anspruch 10, **dadurch gekennzeichnet, dass** bei Vorhandensein von zwei oder mehreren Desodorierungssilos (40, 41) die Desodorierungssilos (40, 41) im Parallelbetrieb betrieben werden.

12. Verfahren nach Anspruch 10, **dadurch gekennzeichnet, dass** bei Vorhandensein von zwei oder mehreren Desodorierungssilos (40, 41) die Desodorierungssilos (40, 41) im Abwechslungsbetrieb betrieben werden.

13. Verfahren nach einem der Ansprüche 1 bis 12, **dadurch gekennzeichnet, dass** im kontinuierlichen Normalbetrieb die beiden Desodorierungssilos (40 oder 41) mit Granulat befüllt und gleichzeitig über ausgangsseitige Zellenradschleusen (56 oder 57) entleert werden.

14. Verfahren nach einem der Ansprüche 1 bis 12, **dadurch gekennzeichnet, dass** im Umschaltbetrieb zwischen den Desodorierungssilos (40 und 41) aus dem nicht mehr kontinuierlich befüllten Desodorierungssilo (40), das Granulat aus dem Desodorierungssilo (40) kontrolliert ausgetragen und pneumatisch zur Granulatkühlung (5) bzw. Verpackung gefördert wird und gleichzeitig die Silobefüllung des zweiten Desodorierungssilos (41) erfolgt.

15. Vorrichtung zur Desodorierung von Recycling-Granulaten (ReGranulate 62) zur Entfernung flüchtiger organischer Verbindungen (VOC) durch Wärme- und/oder Gasbehandlung in mindestens einem Desodorierungssilo (40, 41), wobei das ReGranulat (62) in einem Granulaterhitzer (16) auf seine Desodorierungstemperatur erhitzbar ist, und das erhitzte ReGranulat in das mindestens eine Desodorierungssilo (40, 41) förderbar ist, wobei am Produktausgang des mindestens einen Desodorierungssilos (40, 41) ein Granulatkühler (5) angeordnet ist, **dadurch gekennzeichnet, dass** der Granulaterhitzer (16) seine Prozesswärme von einem eingangsseitigen Rekuperator (13) erhält, der von der Abwärme des ausgangsseitigen angeordneten Granulatkühlers (5) beheizbar ist oder dass die heiße Abluft des Granulatkühlers (5) direkt in den Granulaterhitzer (16) eingeleitet wird.

16. Vorrichtung zur Desodorierung von Recycling-Granulaten (ReGranulate 62) zur Entfernung flüchtiger organischer Verbindungen (VOC) durch Wärme- und/oder Gasbehandlung in mindestens einem Desodorierungssilo (40, 41), wobei das ReGranulat (62) in einem Granulaterhitzer (16) auf seine Desodorierungstemperatur erhitzbar ist, und das erhitzte ReGranulat in das mindestens eine Desodorierungssilo (40, 41) förderbar ist, wobei am Produktausgang des mindestens einen Desodorierungssilos (40, 41) ein Granulatkühler (5) angeordnet ist, **dadurch gekennzeichnet, dass** die Abluft des einen oder der mehreren Desodorierungssilos (40, 41) über eine Siloabluftleitung (29) einem Rekuperator (26) zuführbar ist, der das Spülgas für die Desodorierungssilos (40, 41) aufheizt.

17. Vorrichtung nach einem der Ansprüche 15 oder 16 zur Ausführung des Verfahrens nach mindestens einem der Ansprüche 1 bis 12, **dadurch gekennzeichnet, dass** eine Vergleichmäßigung der Granulatzuführung zum Granulaterhitzer (16) durch eine Zellenradschleuse (54) erfolgt, die am Auslauf des Granulaterhitzers angeordnet ist.

18. Vorrichtung nach einem der Ansprüche 1 bis 17, **dadurch gekennzeichnet, dass** bevorzugt 90% Teilabluftstrom aus dem Granulaterhitzer (16) über eine Filtereinheit (20) als saugseitige Luftmenge einem der Luftaufbereitung (61) dienenden Ventilator (14) zuführbar sind.

19. Vorrichtung nach Anspruch 18, **dadurch gekennzeichnet, dass** nach dem Ventilator (14) die Luft auf dessen Druckseite durch den Rekuperator (13) vorwärmbar ist und anschließend in einem Lufterhitzer (23) noch weiter erhitzbar ist.

20. Vorrichtung nach einem der Ansprüche 1 bis 19, **dadurch gekennzeichnet, dass** nur eines der beiden Desodorierungssilo (40 oder 41) zur gleichen Zeit befüllbar ist.

## Geänderte Patentansprüche

### Geänderte Patentansprüche gemäss Regel 137(2) EPÜ.

1. Verfahren zur Desodorierung von Recycling-Granulaten zur Entfernung flüchtiger organischer Verbindungen (VOC) durch Wärme- und' Gasbehandlung in mindestens einem Desodorierungssilo (40, 41) mit folgenden Verfahrensschritten:
1.1 Behandeln der Granulate (62) im Desodorierungssilo (40, 41) bei einer Desodorierungstemperatur, die kleiner oder gleich dem Erweichungspunkt der Granulate (62) ist²;
1.2 Halten der Granulate (62) auf der Desodorierungstemperatur während einer produktabhängigen Verweilzeitdauer³;
1.3 Ausspülen volatiler Materialien aus den Granulaten (62) aus dem mindestens einen⁴ Desodorierungssilo (40, 41) durch Spülung der Produktfüllung (36) im Desodorierungssilo (40, 41) mittels eines produktabhängig einstellbaren⁵, erhitzten Spülgases;
1.4 Kühlen der desodorierten Granulate (62) in einem ausgangsseitigen Granulatkühler (5)⁶,
**dadurch gekennzeichnet, dass**
das Aufheizen von prozess-eingangsseitigen ReGranulaten (62) im Prozessschritt 1.1 in einem Granulaterhitzer (16) erfolgt, der seine Prozesswärme von einem eingangsseitigen Rekuperator (13) erhält, der von der Abwärme des⁷ ausgangsseitigen Granulatkühlers (5) beheizt wird oder dass die heiße Abluft des Granulatkühlers (5) direkt in den Granulaterhitzer (16) eingeleitet wird.
¹ Bescheid Ziff. 2.1.4: Vorschlag angenommen: "oder" gestrichen
² Vorschlag der Prüfungsabteilung nach Bescheid Ziff. 2.2.1
³ Bescheid Ziff. 2.1.2 Zahlenangabe für die Verweilzeitdauer ist nicht möglich, da von Produkt, Massenstrom, Silohöhe, Temperatur und weiteren Parametern abhängig.
⁴ Anpassung des Wortlauts an S.29, Z.5 "mindestens einem Desodorierungsilo"
⁵ Bescheid Ziff. 2.1.3: Angabe von Temperatur oder Temperaturbereich nicht möglich, weil abhängig von der Art des Produktes, dem Massenstrom, dem Volumeninhalt des Silos (Siehe Seite 18, Z. 5 bis 9); daher wird nur angegeben "produktabhängig einstellbar".
⁶ Diese Einfügung "Granulatkühler 5"entspricht dem ersten Wärmetauscher 15 der Druckschrift D3, dieser Wärmetauscher wirkt als Granulatkühler (D3: S. 10, Z.7-8)
⁷ Anpassung an Verfahrensschritt 1.4

2. Verfahren nach Anspruch 1, **dadurch gekennzeichnet, dass** die Kühlung der im Verfahrensschritt 1.4 am Ausgang des einen oder der mehreren Desodorierungssilos (40, 41) anfallenden gereinigten Granulats (8) im ausgangsseitigen Granulatkühler (5) erfolgt, der von kühler Frischluft durchsetzt ist, welche Frischluft nach Durchströmung des heißen Granulats (8) am Ausgang des Granulatkühlers (5) als aufgeheizter Luftstrom über eine Gasleitung (10) zur Erwärmung des eingangsseitig angeordneten Rekuperators (13) verwendet wird, welcher Rekuperator (13) zur Erwärmung des eingangsseitig angeordneten Granulaterhitzers (16) ausgebildet ist.

3. Verfahren nach Anspruch 1 oder 2, **dadurch gekennzeichnet, dass** das ReGranulat (62) auf die benötigte Desodorierungstemperatur innerhalb einer Verweilzeit durch Spülung mittels Spülgas erhitzt wird und dass anschließend innerhalb einer weiteren Verweilzeit mit einem gekühlten Spülgas gespült wird.

4. Verfahren zur Desodorierung von Recycling-Granulaten (ReGranulate 62) zur Entfernung flüchtiger organischer Verbindungen (VOC) durch Wärme- und Gasbehandlung in mindestens einem Desodorierungssilo (40, 41) mit folgenden Verfahrensschritten:
1.1 Heizen der ReGranulate (62) im mindestens einen⁸ Desodorierungssilo (40, 41) auf eine Desodorierungstemperatur, die kleiner oder gleich dem Erweichungspunkt der ReGranulate (62) ist;
1.2 Halten der ReGranulate (62) auf der Deodorierungstemperatur;
1.3 Ausspülen volatiler Materialien aus den ReGranulaten (62) aus dem Desodorierungssilo (4) durch Spülung der Produktfüllung (36) im Desodorierungssilo (4) mittels eines erhitzten Spülgases;
1.4 Kühlen der ReGranulate (62) in einem ausgangsseitigen Granulatkühler (5)⁹,,
**dadurch gekennzeichnet, dass**
die Wärme der Abluft des einen oder der mehreren Desodorierungssilos (40, 41) zur Erwärmung des Spülgases genutzt wird.
⁸ Anpassung des Wortlauts an S.29, Z.5 "mindestens einem Desodorierungssilo"
⁹ Diese Einfügung "Granulatkühler 5"entspricht dem ersten Wärmetauscher 15 der Druckschrift D3, dieser Wärmetauscher wirkt als Granulatkühler (siehe D3: S. 10, Z.7-8)

5. Verfahren nach einem der Ansprüche 1 bis 4, **dadurch gekennzeichnet, dass** nach dem Prinzip First-in / first- out bevorzugt annähernd alle Granulatkörner die gleiche Verweilzeit im Granulaterhitzer (16) und/oder im Granulatkühler (5) haben und/oder im Desodorierungssilo (40, 41) haben.

6. Verfahren nach einem der Ansprüche 1 bis 5, **dadurch gekennzeichnet, dass** ein Aufschmelzen von Restmengen der Charge A (niedriger Schmelzpunkt) während des Betriebs der Charge B mit höheren Temperaturen verhindert wird.

7. Verfahren nach einem der Ansprüche 1 bis 6, **dadurch gekennzeichnet, dass** zur Vermeidung von Agglomeraten eine Umförderung der Granulatschüttung im Desodorierungssilo (40, 41) stattfindet, wenn kein Produkt ausgelassen wird.

8. Verfahren nach einem der Ansprüche 1 bis 7, **dadurch gekennzeichnet, dass** das ReGranulat (62) in einem ersten Schritt mit Hilfe eines als Querstromwärmeaustauscher ausgebildeten Granulaterhitzers (16) knapp unter die Erweichungstemperatur schonend erhitzt wird und in einem zweiten Schritt die Entgasung mit dem heißen Spülgas in dem separaten Desodorierungssilo (40, 41) stattfindet und dass in einem dritten Schritt die Kühlung des Granulates in einem weiteren als Wärmeaustauscher ausgebildeten Granulatkühler (5) auf eine für das nachfolgende System geeignete Temperatur stattfindet, wobei hochwertige Kunststoffgranulate entstehen.

9. Verfahren nach einem der Ansprüche 1 bis 8, **dadurch gekennzeichnet, dass** das prozess-eingangsseitige ReGranulat (62) mittels einer pneumatischen Flugförderung kontinuierlich zwischen einem minimalen und einem maximalen Massenstrom von einer externen Extrusion einem Zyklon (43) zugeführt wird.

10. Verfahren nach einem der Ansprüche 1 bis 9, **dadurch gekennzeichnet, dass** wahlweise ¹⁰ zwei oder mehr Desodorierungssilos (40, 41) vorhanden sind.
¹⁰ Bescheid Ziff. 2.3: Nur die erste Alternative wurde gestrichen; es bleibt die zweite Alternative, welche als besonders bevorzugte Ausführung zwei oder mehr Desodorierungssilos beansprucht. Diese Alternative wird in den darauffolgenden Ansprüchen 11 bis 14 weiter verfeinert.

11. Verfahren nach Anspruch 10, **dadurch gekennzeichnet, dass** bei Vorhandensein von zwei oder mehreren Desodorierungssilos (40, 41) die Desodorierungssilos (40, 41) im Parallelbetrieb betrieben werden.

12. Verfahren nach Anspruch 10, **dadurch gekennzeichnet, dass** bei Vorhandensein von zwei oder mehreren Desodorierungssilos (40, 41) die Desodorierungssilos (40, 41) im Abwechslungsbetrieb betrieben werden.

13. Verfahren nach einem der Ansprüche 1 bis 12, **dadurch gekennzeichnet, dass** im kontinuierlichen Normalbetrieb die beiden Desodorierungssilos (40 oder 41) mit Granulat befüllt und gleichzeitig über ausgangsseitige Zellenradschleusen (56 oder 57) entleert werden.

14. Verfahren nach einem der Ansprüche 1 bis 12, **dadurch gekennzeichnet, dass** im Umschaltbetrieb zwischen den Desodorierungssilos (40 und 41) aus dem nicht mehr kontinuierlich befüllten Desodorierungssilo (40), das Granulat aus dem Desodorierungssilo (40) kontrolliert ausgetragen und pneumatisch zur Granulatkühlung (5) bzw. Verpackung gefördert wird und gleichzeitig die Silobefüllung des zweiten Desodorierungssilos (41) erfolgt.

15. Vorrichtung zur Desodorierung von Recycling-Granulaten (ReGranulate 62) zur Entfernung flüchtiger organischer Verbindungen (VOC) durch Wärme- und/oder Gasbehandlung in mindestens einem Desodorierungssilo (40, 41), wobei das ReGranulat (62) in einem Granulaterhitzer (16) auf seine Desodorierungstemperatur erhitzbar ist, und das erhitzte ReGranulat in das mindestens eine Desodorierungssilo (40, 41) förderbar ist, wobei am Produktausgang des mindestens einen Desodorierungssilos (40, 41) ein Granulatkühler (5) angeordnet ist, **dadurch gekennzeichnet, dass** der Granulaterhitzer (16) seine Prozesswärme von einem eingangsseitigen Rekuperator (13) erhält, der von der Abwärme des ausgangsseitigen angeordneten Granulatkühlers (5) beheizbar ist oder dass die heiße Abluft des Granulatkühlers (5) direkt in den Granulaterhitzer (16) eingeleitet wird.

16. Vorrichtung zur Desodorierung von Recycling-Granulaten (ReGranulate 62) zur Entfernung flüchtiger organischer Verbindungen (VOC) durch Wärme- und/oder Gasbehandlung in mindestens einem Desodorierungssilo (40, 41), wobei das ReGranulat (62) in einem Granulaterhitzer (16) auf seine Desodorierungstemperatur erhitzbar ist, und das erhitzte ReGranulat in das mindestens eine Desodorierungssilo (40, 41) förderbar ist, wobei am Produktausgang des mindestens einen Desodorierungssilos (40, 41) ein Granulatkühler (5) angeordnet ist, **dadurch gekennzeichnet, dass** die Abluft des einen oder der mehreren Desodorierungssilos (40, 41) über eine Siloabluftleitung (29) einem Rekuperator (26) zuführbar ist, der das Spülgas für die Desodorierungssilos (40, 41) aufheizt.

17. Vorrichtung nach einem der Ansprüche 15 oder 16 zur Ausführung des Verfahrens nach mindestens einem der Ansprüche 1 bis 12, **dadurch gekennzeichnet, dass** eine Vergleichmäßigung der Granulatzuführung zum Granulaterhitzer (16) durch eine Zellenradschleuse (54) erfolgt, die am Auslauf des Granulaterhitzers (16) angeordnet ist.

18. Vorrichtung nach einem der Ansprüche 1 bis 17, **dadurch gekennzeichnet, dass** bevorzugt 90% Teilabluftstrom aus dem Granulaterhitzer (16) über eine Filtereinheit (20) als saugseitige Luftmenge einem der Luftaufbereitung (61) dienenden Ventilator (14) zuführbar sind.

19. Vorrichtung nach Anspruch 18, **dadurch gekennzeichnet, dass** nach dem Ventilator (14) die Luft auf dessen Druckseite durch den Rekuperator (13) vorwärmbar ist und anschließend in einem Lufterhitzer (23) noch weiter erhitzbar ist.

20. Vorrichtung nach einem der Ansprüche 1 bis 19, **dadurch gekennzeichnet, dass** nur eines der beiden Desodorierungssilo (40 oder 41) zur gleichen Zeit befüllbar ist.
